# EUROPÄISCHE PATENTSCHRIFT

(11) **EP 3 115 758 B1**
(45) Veröffentlichungstag und Bekanntmachung des Hinweises auf die Patenterteilung: **07.03.2018**
(21) Anmeldenummer: 16173987.5
(22) Anmeldetag: 10.06.2016
(51) Int. Cl.: G01K 1/20

(54) **ABNEHMBARER KOCHSENSOR**
REMOVABLE COOKING SENSOR
CAPTEUR DE CUISSON AMOVIBLE

(30) Priorität: 08.07.2015 DE 102015212778
(43) Veröffentlichungstag der Anmeldung: 11.01.2017
(73) Patentinhaber: BSH Hausgeräte GmbH, 81739 München (DE)
(72) Erfinder: Marbach, Andreas, 83374 Traunwalchen (DE); Schemmerer, Roman, 83349 Palling (DE); Schuhbäck, Peter, 83329 Holzhausen (DE); Vormann, Ingo, 83413 Fridolfing (DE)

(56) Entgegenhaltungen:
- WO-A1-2013/150397
- DE-A1-102013 205 826
- DE-A1-102014 217 028

## Beschreibung

Die Erfindung betrifft einen abnehmbaren Kochsensor, aufweisend einen Kochgeschirr-Temperatursensor zum Abfühlen einer Wand eines Kochgeschirrs und eine mit dem Kochgeschirr-Temperatursensor verbundene Datenverarbeitungseinrichtung, die dazu eingerichtet ist, eine mittels des Kochgeschirr-Temperatursensors gemessene Kochgeschirr-Temperatur zu verarbeiten. Die Erfindung betrifft ferner ein Kochgerät, aufweisend mindestens eine Kochstelle und eine Datenübertragungseinrichtung zumindest zum drahtlosen Empfangen von Übertragungssignalen von mindestens einem Kochsensor. Die Erfindung betrifft auch ein System aus einem Kochgerät und mindestens einem Kochsensor. Die Erfindung betrifft zudem ein Verfahren zum Betreiben eines abnehmbaren Kochsensors.

DE 10 2006 023 704 A1 offenbart ein Kochfeld mit einer Sensoreinrichtung. Das Kochfeld besitzt eine Kochstellenaufweisende Kochfeldplatte sowie eine Sensoreinrichtung, die im Strahlengang der von einem auf einer Kochstelle befindlichen Kochgefäß emittierten Infrarotstrahlung an der Kochfeldplatte angeordnet ist. Um die Sensoreinrichtung ausschließlich der vom erhitzten Kochgefäß ausgehenden Infrarotstrahlung auszusetzen und störende thermische Einflüsse aus der Umgebung der Sensoreinrichtung fernzuhalten, ist die Sensoreinrichtung mit Ausnahme ihres Strahlungsempfängers durch Wärmedämmmittel gegenüber ihrer Umgebung thermisch isoliert.

DE 10 2004 015 255 A1 offenbart eine Vorrichtung zur Steuerung und/oder Regelung der Temperatur der Kochzone einer Kochmulde, mit einem IR-Sensormodul, das IR-Wärmestrahlung eines Kochtopfes oder dgl. detektiert, wobei oberhalb der Kochmulde eine Einrichtung angeordnet ist, die geeignet ist, die zu detektierende IR-Wärmestrahlung aufzunehmen, wird dahingehend weitergebildet, dass Mittel zur Übertragung der IR-Wärmestrahlung vorgesehen sind, die aufgenommene Wärmestrahlung an das IR-Sensormodul weiterleiten.

WO 2013/150397 A1 offenbart einen Topfdeckel mit einer Sensoreinrichtung, insbesondere an einem Deckel eines Haushaltstopfs, wobei die Sensoreinrichtung an dem Topfdeckel angebracht ist. Es ist gemäß der bevorzugten Ausführungsform vorgesehen, dass eine Verbindung zwischen der Sensoreinrichtung und dem Deckel des Topfes als eine magnetische Verbindung ausgebildet ist.

DE 10 2013 205 826 A1 offenbart eine Temperaturmessvorrichtung, die mittels eines Saugnapfes zum Anbringen an einer Außenseite eines Kochgeschirrs ausgebildet ist.

DE 10 2014 217 028 A1 offenbart einen in einem Kochfeld unterhalb einer Kochfeldplatte angeordneten Temperatursensor zur Temperaturmessung eines auf der Kochfeldplatte abgestellten Kochgeschirrelements.

Es ist die Aufgabe der vorliegenden Erfindung, die Nachteile des Standes der Technik zumindest teilweise zu überwinden und insbesondere eine besonders zuverlässige Möglichkeit zum Betreiben eines abnehmbar an einer Seitenwand eines Kochgeschirrs befestigbaren Kochsensors bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine abnehmbare Sensoreinrichtung (im Folgenden ohne Beschränkung der Allgemeinheit als "Kochsensor" bezeichnet), aufweisend einen Temperatursensor (im Folgenden ohne Beschränkung der Allgemeinheit als "Kochgeschirr-Temperatursensor" bezeichnet) zum Abfühlen einer Wand eines Kochgeschirrs, eine mit dem Kochgeschirr-Temperatursensor verbundene Datenverarbeitungseinrichtung, die dazu eingerichtet ist, eine mittels des Kochgeschirr-Temperatursensors gemessene Temperatur (im Folgenden ohne Beschränkung der Allgemeinheit als "Kochgeschirr-Temperatur" bezeichnet) zu verarbeiten, wobei der Kochsensor zusätzlich mindestens einen diskreten Temperatursensor (im Folgenden ohne Beschränkung der Allgemeinheit als "Eigentemperatursensor" bezeichnet) zum Abfühlen einer Eigentemperatur des Kochsensors aufweist, wobei die Datenverarbeitungseinrichtung mit dem mindestens einen diskreten Temperatursensor verbunden ist und dazu eingerichtet ist, eine mittels des mindestens einen diskreten Eigentemperatursensors jeweils gemessene Temperatur (im Folgenden ohne Beschränkung der Allgemeinheit als "Eigentemperatur" bezeichnet) zu verarbeiten.

Dieser Kochsensor ergibt den Vorteil, dass nun eine direkte und damit genauere Bestimmung einer Temperatur des Kochsensors selbst, nämlich der "Eigentemperatur", möglich ist. Auf eine vergleichsweise ungenaue Bestimmung einer Eigentemperatur mittels des Kochgeschirr-Temperatursensors kann verzichtet werden. Dies ist besonders vorteilhaft für den Fall, dass der Kochsensor bodennah an dem Kochgeschirr befestigt ist und damit ggf. nah an einer heißen Kochzone oder Kochstelle angeordnet ist. In diesem Fall kann der Kochsensor an seiner Unterseite stärker erwärmt werden als es durch den Kochgeschirr-Temperatursensor wahrnehmbar ist. Folglich kann durch den mindestens einen Eigentemperatursensor auch ein Schutz des Kochsensors vor einer überhöhten Temperatur bereitgestellt werden.

Der Kochsensor kann beispielsweise dergestalt zur abnehmbaren Befestigung an dem Kochgeschirr ausgebildet sein, dass er auf das Kochgeschirr oder auf einen mit dem Kochgeschirr insbesondere fest verbundenen Adapter aufgeklemmt oder aufgerastet werden kann.

Es ist eine besonders einfache und vielfältig einsetzbare Weiterbildung, dass der Kochsensor mindestens einen Magneten zur lösbaren magnetischen Befestigung an dem Kochgeschirr aufweist. Der mindestens eine Magnet kann z.B. an einer Unterseite des Kochsensors angeordnet sein.

Der Kochgeschirr-Temperatursensor ist dazu eingerichtet und angeordnet, die Kochgeschirr-Temperatur berührend oder berührungslos abzufühlen.

Das Kochgeschirr kann insbesondere ein Kochgefäß wie ein Kochtopf, eine Pfanne, ein Bräter usw. sein.

Die mit dem Kochgeschirr-Temperatursensor elektrisch verbundene Datenverarbeitungseinrichtung kann eine Elektronik sein, z.B. aufweisend mindestens einen Mikroprozessor, einen ASIC, ein FPGA usw. Die Datenverarbeitungseinrichtung ist eine zu dem Eigentemperatursensor eigenständige Komponente. In mindestens einen Elektronikbaustein oder IC integrierte Temperatursensoren zur Überwachung einer Temperatur des Elektronikbausteins selbst zählen nicht als Eigentemperatursensoren.

Unter einem "diskreten" Eigentemperatursensor kann insbesondere ein Eigentemperatursensor verstanden werden, der eigenständig in dem Kochsensor verbaut worden ist, z.B. darin verlötet worden ist.

Unter der Eigentemperatur kann insbesondere eine Temperatur in der unmittelbaren Umgebung des Eigentemperatursensors verstanden werden. Dies kann beispielsweise eine Lufttemperatur sein, insbesondere eine Lufttemperatur des Kochsensors in der unmittelbaren Umgebung des Eigentemperatursensors.

Dass die Datenverarbeitungseinrichtung dazu eingerichtet ist, eine mittels eines Temperatursensors gemessene Temperatur zu verarbeiten, kann umfassen, dass die Datenverarbeitungseinrichtung einen mittels des Temperatursensors erfassten physikalischen Zustand (z.B. einen elektrischen Widerstand) oder ein mittels des Temperatursensors erfasstes physikalisches Messsignal (z.B. eine elektrische Spannung oder einen elektrischen Strom) verarbeiten kann. Eine Analog-Digital-Umwandlung kann von der Datenverarbeitungseinrichtung oder mittels eines eigenständigen A/D-Wandlers vorgenommen werden.

Es ist eine Weiterbildung, dass die Datenverarbeitungseinrichtung dazu eingerichtet ist, die Temperaturen oder Temperaturwerte in ein für eine Datenübertragung geeignetes Format umzuwandeln bzw. für eine Datenübertragung geeignete Daten zu erzeugen, welche die Temperaturen oder Temperaturwerte aufweisen.

Es ist noch eine Weiterbildung, dass der Kochgeschirr-Temperatursensor die gemessene Kochgeschirr-Temperatur bereits als digitalisierten und ggf. vorverarbeiteten Temperaturwert ausgibt. Die Datenverarbeitungseinrichtung kann dann insbesondere dazu eingerichtet sein, diesen digital vorliegenden Temperaturwert in ein für eine Datenübertragung geeignetes Format umzuwandeln bzw. dazu, für eine Datenübertragung geeignete Daten zu erzeugen, welche die Kochgeschirr-Temperatur aufweisen.

Die Datenverarbeitungseinrichtung kann die mittels der Eigentemperatursensoren gemessenen Temperaturwerte ebenfalls in ein für eine Datenübertragung geeignetes Format umwandeln oder für eine Datenübertragung geeignete Daten zu erzeugen, welche die Temperaturen bzw. Temperaturwerte aufweisen.

Die Datenverarbeitungseinrichtung kann ferner die mittels der Eigentemperatursensoren gemessenen Temperaturwerte auswerten, beispielsweise deren Darstellung umwandeln. So kann die Datenverarbeitungseinrichtung in einer Weiterbildung als Spannungswerte vorliegende Eigentemperaturen in Temperaturwerte mit physikalischen Einheiten (z.B. Kelvin oder Grad Celsius) umwandeln. Dies kann beispielsweise mit Hilfe von Kennlinien, Tabellen usw. umgesetzt werden.

Der Kochsensor kann mit einer drahtlos arbeitenden Datenübertragungseinrichtung (z.B. auf Funk- oder IR-Basis, beispielsweise Bluetooth LE) ausgerüstet sein, um (z.B. Funk- oder IR-) Übertragungssignale drahtlos auszusenden und ggf. auch zu empfangen. Die Datenübertragungseinrichtung kann mit der Datenverarbeitungseinrichtung gekoppelt sein, um beispielsweise von dieser empfangene Daten auszusenden und ggf. empfangene Daten an die Datenverarbeitungseinrichtung zu liefern. Somit können beispielsweise von dem Kochsensor die Übertragungssignale, welche die Kochgeschirr-Temperatur und/oder mindestens eine Eigentemperatur umfassen, mittels der Datenübertragungseinrichtung drahtlos an das Kochgerät übertragen werden. Es ist folglich auch eine Ausgestaltung, dass der Kochsensor eine mit der Datenverarbeitungseinrichtung verbundene Datenübertragungseinrichtung zum drahtlosen Aussenden (und ggf. auch Empfangen) von Übertragungssignalen aufweist, wobei die Übertragungssignale die Eigentemperatur(en) bzw. den oder die Eigentemperaturwert(e) umfassen können. Jedoch ist grundsätzlich auch eine drahtgebundene Datenübertragung möglich.

Die Datenverarbeitungseinrichtung und die Datenübertragungseinrichtung können als eine kombinierte oder integrierte Datenverarbeitungs- und Datenübertragungs-Einrichtung vorliegen.

Allgemein kann die Datenübertragungseinrichtung auch zum Empfang von Übertragungssignalen ausgebildet sein, z.B. in Form einer kombinierten Sende-/Empfangs-Einrichtung. Der Kochsensor kann darüber z.B. Steuersignale oder Befehle empfangen, beispielsweise um zu veranlassen, dass die Temperatursensoren abgefühlt werden und entsprechende Werte ausgesandt werden (was auch als "externe Triggerung" gezeichnet werden kann). Zudem kann der Kochsensor so in einer Weiterbildung als ein passiv anregbarer Kochsensor ausgebildet werden, der z.B. nach Art eines fernauslesbaren Transponders arbeitet. Die Datenverarbeitungseinrichtung kann dann beispielsweise als Oberflächenwellenbauteil ausgebildet sein.

Es ist eine Ausgestaltung, dass der Kochsensor mehrere diskrete Eigentemperatursensoren aufweist. Dadurch kann ein Erreichen oder Überschreiten eines kritischen Eigentemperaturwerts (der z.B. - sollte er beibehalten oder sogar gesteigert werden - zu einer merklichen Betriebsbeeinträchtigung oder Schädigung des Kochsensors führen könnte) lokal aufgelöst bestimmt werden. Dies ist besonders vorteilhaft, um eine Überhitzung für den Fall sicher feststellen zu können, dass der Kochsensor sich nahe der Kochstelle befindet und folglich in der Nähe der Kochstelle merklich stärker erhitzt wird als entfernt davon. Die mehreren Eigentemperatursensoren können in anderen Worten durch ihre verteilte Anordnung kritische Eigentemperaturwerte auch bei einem hohen Temperaturgefälle in dem Kochsensor sicher feststellen.

Es ist noch eine Ausgestaltung, dass der Kochsensor drei diskrete Eigentemperatursensoren aufweist. Diese Zahl hat sich als ein besonders günstiger Kompromiss zwischen geringen Kosten und einer sicheren Feststellung auch lokaler Temperaturüberhöhungen herausgestellt.

Es ist eine weitere Ausgestaltung, dass die diskreten Eigentemperatursensoren in einer Umfangsrichtung zumindest ungefähr gleichverteilt angeordnet sind. Dadurch können lokale Temperaturüberhöhungen - insbesondere auch bei einer Anordnung in der Nähe der Kochstelle - unabhängig von einer Drehlage des Kochsensors sicher festgestellt werden.

Es ist eine Weiterbildung, dass der Kochsensor eine scheibenartige, zylindrische oder quaderförmige Grundform aufweist und bei seiner Befestigung mit einer seiner Deckflächen (die im Folgenden ohne Beschränkung der Allgemeinheit als "Unterseite" bezeichnet wird) der abzufühlenden Wand des Kochgeschirrs zugewandt ist. Insbesondere kann der Kochgeschirr-Temperatursensor an der Unterseite des Kochsensors angeordnet sein.

Es ist noch eine Weiterbildung, dass der Kochsensor eine Platine oder Leiterplatte (allgemein: ein Substrat) aufweist, an der der Kochgeschirr-Temperatursensor, der mindestens eine diskrete Eigentemperatursensor, die Datenverarbeitungseinrichtung, die Datenübertragungseinrichtung und/oder ein elektrischer Energiespeicher angeordnet ist. Die Platine kann - beispielsweise konform zu einer Querschnittsform des Kochsensors bzw. seines Gehäuses - eine kreisrunde oder rechteckige Grundform aufweisen.

Es ist eine weitere Ausgestaltung, dass der mindestens eine diskrete Eigentemperatursensor an einem Randbereich einer Platine angeordnet ist, so dass eine seitlich auf den Kochsensor (z.B. über seine Mantelfläche) einwirkende Temperaturquelle besonders schnell erkannt wird. Der Randbereich kann z.B. ein Bereich einer Oberfläche der Platine sein, der ausgehend von dem Rand der Platine innerhalb von 30%, insbesondere innerhalb von 25%, insbesondere innerhalb von 20%, insbesondere innerhalb von 15%, insbesondere innerhalb von 10%, insbesondere innerhalb von 5%, eines Abstands zu einem Mittelpunkt der Platine angeordnet ist. In anderen Worten ist der mindestens eine diskrete Eigentemperatursensor in einem bis zum äußeren Rand der Platine reichenden ringförmigen Bereich angeordnet, der eine Breite aufweist, maximal 30% usw. der Entfernung zu der Mitte der Platine entspricht. Für eine kreisrunde Platine würde dies einem um den Mittelpunkt der Platine zentrierten Ring entsprechen, dessen Punkte in einem Bereich von 70% bis 100% eines Radius r liegen, der von dem Mittelpunkt (r = 0) zu dem Rand (r = 100%) reicht.

Der diskrete Eigentemperatursensor kann aber auch seitlich über die Platine herausragen.

Es ist eine weitere Ausgestaltung, dass zusätzlich mindestens ein diskreter Eigentemperatursensor zwischen der Platine und dem elektrischen Energiespeicher angeordnet ist. Dadurch kann speziell der Energiespeicher wirksam vor einer Überhitzung geschützt werden. Dies ist besonders vorteilhaft, da viele elektrische Energiespeicher (Batterie, Akkumulator, Superkondensator usw.) bei höherer Temperatur leicht beschädigt werden können.

Der elektrische Energiespeicher ist zum Betrieb des Kochsensors, beispielsweise zum Betrieb des Kochgeschirr-Temperatursensors, der Datenverarbeitungseinrichtung, der Datenübertragungseinrichtung usw., vorgesehen und eingerichtet. Der elektrische Energiespeicher ermöglicht es, den Kochsensor aktiv zu betreiben. So kann der Kochsensor von sich aus die Übertragungssignale aussenden, z.B. in regelmäßigen zeitlichen Abständen.

Es ist ferner eine Ausgestaltung, dass der mindestens eine diskrete Eigentemperatursensor ein Thermistor, insbesondere ein Heißleiter (auch als "NTC-Widerstand" bezeichnet) oder ein Kaltleiter, ist. Insbesondere ein Heißleiter ist kompakt, preiswert und einfach abfühlbar.

Es ist außerdem eine Ausgestaltung, dass der Kochgeschirr-Temperatursensor ein IR-Sensor ist. Dies ermöglicht eine berührungslose Abfühlung der Kochgeschirr-Temperatur. Das Blickfeld des IR-Sensors ist insbesondere auf eine vorgesehene Position der Wand des Kochgeschirrs ausgerichtet. Dazu kann die Unterseite des Kochsensors ein offenes oder ein mit einer IR-durchlässigen Scheibe bedecktes Fenster aufweisen. Jedoch kann der Kochgeschirr-Temperatursensor auch als ein Kontaktsensor ausgebildet sein, der zur Temperaturabfühlung in Kontakt mit der Wand des Kochgeschirrs stehen sollte. Der IR-Sensor kann ein insbesondere ein Thermopile sein oder einen Thermopile aufweisen. Der IR-Sensor kann in einer Weiterbildung digitalisierte und ggf. vorverarbeitete Temperaturwerte ausgeben.

Die Aufgabe wird auch gelöst durch ein Kochgerät, aufweisend mindestens eine Kochstelle und eine Datenübertragungseinrichtung zumindest zum drahtlosen Empfangen von Übertragungssignalen, welche die Eigentemperatur(en) aufweisen, von mindestens einem Kochsensor wie oben beschrieben.

Die Kochgeschirr-Temperatur kann von dem Kochgerät dazu verwendet werden, eine Energiezufuhr zu mindestens einer Kochstelle zu steuern oder zu regeln.

Das Kochgerät kann insbesondere dazu eingerichtet sein, die in den Übertragungssignalen enthaltende Eigentemperatur(en) auszuwerten und nach Erreichen mindestens einer vorgegebenen Abschaltbedingung, die auf den Werten der Eigentemperatur bzw. den Eigentemperaturen (en) beruht, eine Leistungszufuhr zu derjenigen Kochstelle, die dem zugehörigen Kochsensor zugeordnet ist, oder eine Leistungszufuhr zu allen Kochstellen zu verringern. So kann eine Überhitzung des Kochsensors wirksam verhindert werden.

Die Abschaltbedingung kann beispielsweise so ausgestaltet sein, dass die betreffende Kochstelle oder alle Kochstellen abgeschaltet werden, wenn eine Eigentemperatur auch nur einer der Eigentemperaturen einen kritischen ersten Schwellwert erreicht oder überschreitet. Die Abschaltbedingung kann zusätzlich oder alternativ eine Verknüpfung mehrerer Eigentemperaturen oder Eigentemperaturwerte umfassen, z.B. einen Mittelwert. Die betreffende Kochstelle oder alle Kochstellen können dann z.B. abgeschaltet werden, wenn ein Mittelwert einen kritischen zweiten Schwellwert erreicht oder überschreitet. Der erste Schwellwert und der zweite Schwellwert können sich unterscheiden.

Das Verringern der Leistungszufuhr kann ein Verringern auf einen Wert größer Null (z.B. entsprechend einer kleineren Kochstufe oder einer geringeren Soll-Temperatur) oder auch eine Verringerung auf Null (entsprechend einer Abschaltung) umfassen.

Das Kochgerät kann analog zu dem Kochsensor ausgebildet sein. So kann die Datenübertragungseinrichtung zum Empfangen von Funksignalen (insbesondere nach dem Bluetooth-Standard) oder IR-Signalen ausgebildet sein. Auch kann Datenübertragungseinrichtung zusätzlich zum Aussenden von Übertragungssignalen an den Kochsensor ausgebildet sein, z.B. in Form einer kombinierten Sende-/Empfangs-Einrichtung. Dies erlaubt eine bidirektionale Signalübertragung zwischen dem Kochgerät und dem Kochsensor.

Das Kochgerät ist insbesondere ein Haushaltsgerät. Das Kochgerät kann ein eigenständiges Kochfeld oder ein Kombinationsgerät mit einem Kochfeld (wie Herd usw.) sein.

Die Erfindung wird ferner gelöst durch ein System aus einem Kochgerät wie oben beschrieben und mindestens einem Kochsensor wie oben beschrieben.

Die Erfindung wird außerdem gelöst durch ein Verfahren zum Betreiben eines abnehmbaren Kochsensors, wobei mindestens eine Eigentemperatur des Kochsensors durch mindestens einen diskreten Eigentemperatursensor abgefühlt wird. Das Verfahren kann analog zu den oben beschriebenen Vorrichtungen ausgebildet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in Schrägansicht einen geöffneten Kochsensor; und
- Fig.2: zeigt als Schnittdarstellung in Seitenansicht einen Ausschnitt aus einer Kombination aus einem Kochsensor, einem Kochgeschirr und einem Kochgerät.

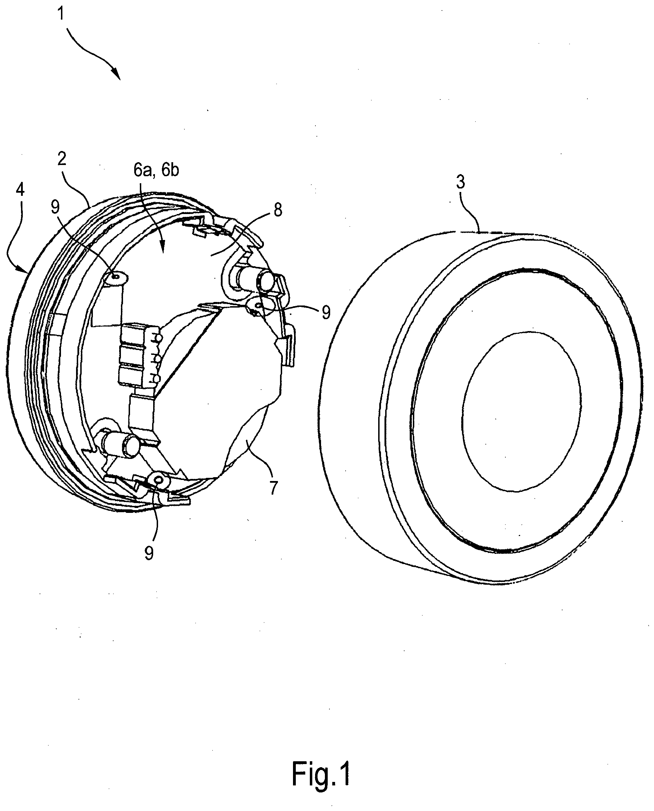

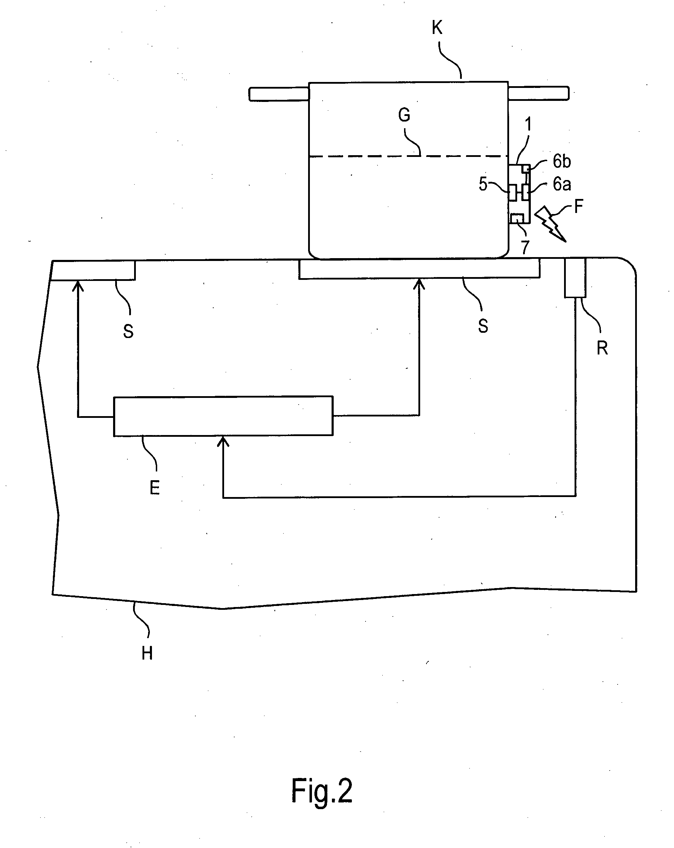

Fig.1 zeigt einen Kochsensor 1 mit einem Unterteil 2 und einem auf dem Unterteil 2 aufsetzbaren - hier abgenommen gezeigten - Deckel 3. Der Kochsensor 1 ist mit seiner Unterseite 4 an einer Wand eines Kochgeschirrs K (siehe Fig.2) z.B. magnetisch und damit abnehmbar befestigbar. Der Kochsensor 1 weist an seinem Unterteil 2 einen Kochgeschirr-Temperatursensor in Form eines IR-Sensors 5 (siehe Fig.2) zum Abfühlen einer Kochgeschirr-Temperatur an einer Wand - insbesondere Seitenwand - des Kochgeschirrs K auf. Die Wand des Kochgeschirrs K liegt bei aufgesetztem Kochsensor 1 im Sichtfeld des IR-Sensors 5. Der IR-Sensor 5 weist einen Thermopile auf.

Mit dem IR-Sensor 5 ist eine Datenverarbeitungseinrichtung 6a verbunden, und mit der Datenverarbeitungseinrichtung 6a eine Datenübertragungseinrichtung 6b (siehe Fig.2). Die Datenverarbeitungseinrichtung 6a kann z.B. als ein Mikroprozessor vorliegen, und die Datenübertragungseinrichtung 6b als ein Bluetooth-Modul. Die Datenverarbeitungseinrichtung 6a ist dazu eingerichtet ist, von dem IR-Sensors 5 erzeugte digitalisierte Kochgeschirr-Temperaturwerte in ein Format zu überführen, das zur Aussendung über die Datenübertragungseinrichtung 6b geeignet ist.

Die Datenübertragungseinrichtung 6b sendet die von der Datenverarbeitungseinrichtung 6a erzeugten Daten, welche die Kochgeschirr-Temperatur aufweisen, in Form von Funksignalen F (siehe Fig.2) aus. Die Funksignale F können z.B. dem Bluetooth-Standard entsprechen, insbesondere Bluetooth LE. Sie können z.B. mit einer Frequenz von 2,4 GHz abgestrahlt werden.

Der IR-Sensor 5, die Datenverarbeitungseinrichtung 6a und die Datenübertragungseinrichtung 6b können mittels eines elektrischen Energiespeichers 7, insbesondere Stromspeichers, wie einer Batterie, eines Akkumulators usw. aktiv betrieben werden. Beispielsweise kann der Kochsensor 1 dadurch von sich aus die Funksignale F aussenden. Falls die Datenübertragungseinrichtung 6b auch zum Empfangen von Funksignalen ausgebildet ist, können die Funksignale F, welche die Kochgeschirr-Temperatur aufweisen, auf Nachfrage hin ausgesandt werden.

Der IR-Sensor 5, die Datenverarbeitungseinrichtung 6a, die Datenübertragungseinrichtung 6b und der Energiespeicher 7 sind auf einer Platine 8 mit kreisrunder Grundform angeordnet, welche in das Unterteil 2 eingesetzt ist.

Fig.2 zeigt als Schnittdarstellung in Seitenansicht eine Kombination aus dem Kochsensor 1, dem als Topf ausgebildeten Kochgeschirr K und ausschnittsweise einem Kochgerät H. Das Kochgerät H kann beispielsweise ein eigenständiges Kochfeld oder ein Herd sein. Das Kochgerät H weist oberseitig mehrere Kochstellen S auf, wobei auf einer der Kochstellen S das Kochgeschirr K abgestellt ist. Die Kochstellen S können mittels einer zentralen Steuereinrichtung E mit elektrischer Leistung versorgt werden, z.B. entsprechend einer vorgegebenen Kochstufe, einer vorgegebenen Soll-Garguttemperatur oder einer vorgegebenen Soll-Kochgeschirrtemperatur.

Die zentrale Steuereinrichtung E ist mit einer Datenübertragungseinrichtung R verbunden, welche die von dem Kochsensor 1 ausgesandten Funksignale F empfangen kann und der Steuereinrichtung E zuführen kann. Die Steuereinrichtung E kann die in diesen Daten enthaltene Kochgeschirr-Temperatur beispielsweise dazu nutzen, um die der zugehörigen Kochstelle S zugeführte Leistung zu regeln, z.B. auf die Soll-Garguttemperatur oder eine Soll-Kochgeschirrtemperatur hin. Die Datenübertragungseinrichtung R kann auch eine Sendefunktion aufweisen, um z.B. Steuerbefehle an den Kochsensor 1 auszusenden, beispielsweise um diesen abzufragen.

Nun wieder Bezug nehmend auf Fig.1 weist der Kochsensor 1 zusätzlich drei diskrete Eigentemperatursensoren in Form von NTC-Widerständen 9 (zur besseren Erkennbarkeit durch Kreise umrandet) auf. Die NTC-Widerstände 9 sind auf der Platine 8 angebracht, und zwar an einem äußeren Randbereich in einer Umfangsrichtung der Platine 8 zumindest ungefähr gleichverteilt angeordnet.

Die NTC-Widerstände 9 sind mit der Datenverarbeitungseinrichtung 6a verbunden, so dass die Datenverarbeitungseinrichtung 6a beruhend auf den NTC-Widerständen 9 eine jeweilige Eigentemperatur bestimmen kann. Die Datenverarbeitungseinrichtung 6a kann beispielsweise an den NTC-Widerständen 9 jeweils anliegende elektrische Widerstandswerte erfassen und diese Widerstandswerte oder daraus abgeleitete Eigentemperaturwerte als die Eigentemperatur bestimmen. Die bestimmten Eigentemperaturen können wie die Kochgeschirr-Temperatur mit oder in den Funksignalen F ausgesandt werden, insbesondere in einem Funksignal F gemeinsam mit der Kochgeschirr-Temperatur.

Zusätzlich kann mindestens ein diskreter Eigentemperatursensor (o. Abb.) zwischen der Platine 8 und dem Energiespeicher 7 angeordnet sein.

Das Kochgerät H ist dazu eingerichtet, die in den von dem Kochsensor 1 empfangenen Funksignalen F enthaltenen Eigentemperaturen auszuwerten und nach Erreichen einer vorgegebenen Bedingung ("Abschaltbedingung"), die auf mindestens einer der Eigentemperaturen beruht, eine Leistungszufuhr zu derjenigen Kochstelle S, die dem zugehörigen Kochsensor 1 zugeordnet ist, zu verringern.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Kochsensor
- 2: Unterteil des Kochsensors
- 3: Deckel des Kochsensors
- 4: Unterseite
- 5: IR-Sensor
- 6a: Datenverarbeitungseinrichtung des Kochsensors
- 6b: Datenübertragungseinrichtung des Kochsensors
- 7: Energiespeicher
- 8: Platine
- 9: NTC-Widerstand
- E: Steuereinrichtung
- F: Von dem Kochsensor abgestrahltes Funksignal
- G: Gargut
- H: Kochgerät
- K: Kochgeschirr
- R: Datenübertragungseinrichtung des Kochgeräts
- S: Kochstelle

## Patentansprüche

1. Abnehmbarer Kochsensor (1), aufweisend
- einen Kochgeschirr-Temperatursensor (5) zum Abfühlen einer Wand eines Kochgeschirrs (K) und
- eine mit dem Kochgeschirr-Temperatursensor (5) verbundene Datenverarbeitungseinrichtung (6a), die dazu eingerichtet ist, eine mittels des Kochgeschirr-Temperatursensors (5) gemessene Kochgeschirr-Temperatur zu verarbeiten, **dadurch gekennzeichnet, dass**
- der Kochsensor (1) zusätzlich mindestens einen diskreten Eigentemperatursensor (9) zum Abfühlen einer Eigentemperatur des Kochsensors (1) aufweist, und dass
- die Datenverarbeitungseinrichtung (6a) mit dem mindestens einen diskreten Eigentemperatursensor (9) verbunden ist und dazu eingerichtet ist, eine jeweilige mittels des mindestens einen diskreten Eigentemperatursensors (9) gemessene Eigentemperatur zu verarbeiten.

2. Kochsensor (1) nach Anspruch 1, **dadurch gekennzeichnet, dass** der Kochsensor (1) mehrere diskrete Eigentemperatursensoren (9) aufweist.

3. Kochsensor (1) nach Anspruch 2, **dadurch gekennzeichnet, dass** der Kochsensor (1) drei diskrete Eigentemperatursensoren (9) aufweist.

4. Kochsensor (1) nach einem der Ansprüche 2 oder 3, **dadurch gekennzeichnet, dass** die diskreten Eigentemperatursensoren (9) in einer Umfangsrichtung zumindest ungefähr gleichverteilt angeordnet sind.

5. Kochsensor (1) nach einem der vorhergehenden Ansprüche, **dadurch gekennzeichnet, dass** der mindestens eine diskrete Eigentemperatursensor (9) an einem Randbereich einer Platine (8) angeordnet sind, die auch die Datenverarbeitungseinrichtung (6a), die Datenübertragungseinrichtung und einen elektrischen Energiespeicher (7) zum Betreiben des Kochsensors (1) aufweist.

6. Kochsensor (1) nach Anspruch 5, **dadurch gekennzeichnet, dass** zusätzlich mindestens ein diskreter Eigentemperatursensor zwischen der Platine (8) und dem Energiespeicher (7) angeordnet ist.

7. Kochsensor (1) nach einem der vorhergehenden Ansprüche, **dadurch gekennzeichnet, dass** der mindestens eine diskrete Eigentemperatursensor (9) ein Thermistor, insbesondere ein Heißleiter, ist.

8. Kochsensor (1) nach einem der vorhergehenden Ansprüche, **dadurch gekennzeichnet, dass** der Kochsensor (1) eine mit der Datenverarbeitungseinrichtung (6a) verbundene Datenübertragungseinrichtung (6b) zumindest zum drahtlosen Aussenden von Übertragungssignalen (F) aufweist, wobei die Übertragungssignale (F) die mindestens eine bestimmte Eigentemperatur umfassen können.

9. Kochsensor (1) nach einem der vorhergehenden Ansprüche, **dadurch gekennzeichnet, dass** der Kochgeschirr-Temperatursensor (5) ein IR-Sensor ist.

10. Kochgerät (H), aufweisend mindestens eine Kochstelle (S) und eine Datenübertragungseinrichtung (R) zumindest zum drahtlosen Empfangen von Übertragungssignalen (F), welche die mindestens eine bestimmte Eigentemperatur umfassen, von mindestens einem Kochsensor (1) nach einem der Ansprüche 2 bis 9, **dadurch gekennzeichnet, dass** das Kochgerät (H) dazu eingerichtet ist, die in den Übertragungssignalen (F) enthaltende Eigentemperatur der mehreren Eigentemperatursensoren (9) auszuwerten und nach Erreichen einer vorgegebenen Abschaltbedingung, die auf der Eigentemperatur mindestens eines Eigentemperatursensors (9) beruht, eine Leistungszufuhr zu derjenigen Kochstelle (S), die dem zugehörigen Kochsensor (1) zugeordnet ist, zu verringern.

11. System (1, H) aus einem Kochgerät (H) nach Anspruch 10 und mindestens einem Kochsensor (1) nach einem der Ansprüche 2 bis 9.

12. Verfahren zum Betreiben eines abnehmbaren Kochsensors (1) nach einem der Ansprüche 1-9, wobei mindestens eine Eigentemperatur des Kochsensors (1) durch den mindestens einen diskreten Eigentemperatursensor (9) abgefühlt wird.

## Claims

1. Removable cooking sensor (1), having
- a cooking utensil temperature sensor (5) for sensing a wall of a cooking utensil (K) and
- a data processing facility (6a) connected to the cooking utensil temperature sensor (5), which is configured to process a cooking utensil temperature measured by means of the cooking utensil temperature sensor (5),
**characterised in that**
- the cooking sensor (1) additionally has at least one discrete intrinsic temperature sensor (9) for sensing an intrinsic temperature of the cooking sensor (1), and that
- the data processing facility (6a) is connected to the at least one discrete intrinsic temperature sensor (9) and is configured to process an intrinsic temperature measured by means of the at least one discrete intrinsic temperature sensor (9).

2. Cooking sensor (1) according to claim 1, **characterised in that** the cooking sensor (1) has a plurality of discrete intrinsic temperature sensors (9).

3. Cooking sensor (1) according to claim 2, **characterised in that** the cooking sensor (1) has three discrete intrinsic temperature sensors (9).

4. Cooking sensor (1) according to one of claims 2 or 3, **characterised in that** the discrete intrinsic temperature sensors (9) are arranged at least approximately equally distributed in a circumferential direction.

5. Cooking sensor (1) according to one of the preceding claims, **characterised in that** the at least one discrete intrinsic temperature sensor (9) are arranged on an edge region of a printed circuit board (8), which also has the data processing facility (6a), the data transmission facility and an electrical energy storage device (7) for operating the cooking sensor (1).

6. Cooking sensor (1) according to claim 5, **characterised in that** in addition at least one discrete intrinsic temperature sensor is arranged between the printed circuit board (8) and the energy storage device (7).

7. Cooking sensor (1) according to one of the preceding claims, **characterised in that** the at least one discrete intrinsic temperature sensor (9) is a thermistor, in particular an NTC thermistor.

8. Cooking sensor (1) according to one of the preceding claims, **characterised in that** the cooking sensor (1) has a data transmission facility (6b) connected to the data processing facility (6a) at least for wirelessly broadcasting transmission signals (F), wherein the transmission signals (F) may comprise the at least one specific intrinsic temperature.

9. Cooking sensor (1) according to one of the preceding claims, **characterised in that** the cooking utensil temperature sensor (5) is an IR sensor.

10. Cooking appliance (H), having at least one hob (S) and a data transmission facility (R) at least for wirelessly receiving transmission signals (F), which comprise the at least one specific intrinsic temperature, from at least one cooking sensor (1) according to one of claims 2 to 9, **characterised in that** the cooking appliance (H) is configured to evaluate the intrinsic temperature, contained in the transmission signals (F), of the plurality of intrinsic temperature sensors (9) and, once a predefined switch-off condition which depends on the intrinsic temperature of at least one intrinsic temperature sensor (9) has been reached, to reduce a power input to that hob (S), to which the associated cooking sensor (1) is assigned.

11. System (1, H) made of a cooking appliance (H) according to claim 10 and at least one cooking sensor (1) according to one of claims 2 to 9.

12. Method for operating a removable cooking sensor (1) according to one of claims 1-9, wherein at least one intrinsic temperature of the cooking sensor (1) is sensed by the at least one discrete intrinsic temperature sensor (9).

## Revendications

1. Capteur de cuisson (1) amovible, présentant
- un capteur de température (5) de récipient de cuisson, destiné à détecter une paroi d'un récipient de cuisson (K), et
- un dispositif de traitement de données (6a) relié au capteur de température (5) de récipient de cuisson, lequel dispositif est configuré pour traiter une température de récipient de cuisson mesurée au moyen du capteur de température (5) de récipient de cuisson,
**caractérisé en ce que**
- le capteur de cuisson (1) présente en outre au moins un capteur discret de propre température (9) destiné à détecter une propre température du capteur de cuisson (1), et **en ce que**
- le dispositif de traitement de données (6a) est relié à l'au moins un capteur discret de propre température (9) et est configuré pour traiter une propre température respective mesurée à l'aide de l'au moins un capteur discret de propre température (9).

2. Capteur de cuisson (1) selon la revendication 1, **caractérisé en ce que** le capteur de cuisson (1) présente plusieurs capteurs discrets de propre température (9).

3. Capteur de cuisson (1) selon la revendication 2, **caractérisé en ce que** le capteur de cuisson (1) présente trois capteurs discrets de propre température (9).

4. Capteur de cuisson (1) selon l'une quelconque des revendications 2 ou 3, **caractérisé en ce que** les capteurs discrets de propre température (9) sont disposés dans une direction circonférentielle en étant répartis au moins approximativement de manière régulière.

5. Capteur de cuisson (1) selon l'une quelconque des revendications précédentes, **caractérisé en ce que** l'au moins un capteur discret de propre température (9) est disposé sur une partie de bord d'une platine (8) qui présente également le dispositif de traitement de données (6a), le dispositif de transfert de données et un accumulateur d'énergie (7) électrique pour le fonctionnement du capteur de cuisson (1).

6. Capteur de cuisson (1) selon la revendication 5, **caractérisé en ce qu'**au moins un capteur discret de propre température est disposé en plus entre la platine (8) et l'accumulateur d'énergie (7).

7. Capteur de cuisson (1) selon l'une quelconque des revendications précédentes, **caractérisé en ce que** l'au moins un capteur discret de propre température (9) est un thermistor, notamment une résistance à coefficient de température négatif.

8. Capteur de cuisson (1) selon l'une quelconque des revendications précédentes, **caractérisé en ce que** le capteur de cuisson (1) présente un dispositif de transfert de données (6b) relié au dispositif de traitement de données (6a) au moins pour l'émission sans fil de signaux de transmission (F), les signaux de transmission (F) pouvant comprendre l'au moins une propre température déterminée.

9. Capteur de cuisson (1) selon l'une quelconque des revendications précédentes, **caractérisé en ce que** le capteur de température (5) de récipient de cuisson est un capteur IR.

10. Appareil de cuisson (H) présentant au moins un emplacement de cuisson (S) et un dispositif de transfert de données (R) au moins pour la réception sans fil de signaux de transmission (F), lesquels comprennent l'au moins une propre température déterminée, d'au moins un capteur de cuisson (1) selon l'une quelconque des revendications 2 à 9, **caractérisé en ce que** l'appareil de cuisson (H) est configuré pour évaluer la propre température, contenue dans les signaux de transmission (F), des plusieurs capteurs de propre température (9) et, après l'obtention d'une condition de mise hors service, laquelle repose sur la propre température d'au moins un capteur de propre température (9), pour diminuer une arrivée de puissance vers l'emplacement de cuisson (S) qui est associé au capteur de cuisson (1) correspondant.

11. Système (1, H) constitué d'un appareil de cuisson (H) selon la revendication 10 et d'au moins un capteur de cuisson (1) selon l'une quelconque des revendications 2 à 9.

12. Procédé de fonctionnement d'un capteur de cuisson (1) amovible selon l'une quelconque des revendications 1 à 9, au moins une propre température du capteur de cuisson (1) étant détectée par l'au moins un capteur discret de propre température (9).
